# EUROPÄISCHE PATENTSCHRIFT

(11) **EP 1 542 431 B1**
(45) Veröffentlichungstag und Bekanntmachung des Hinweises auf die Patenterteilung: **21.05.2008**
(21) Anmeldenummer: 04020699.7
(22) Anmeldetag: 01.09.2004
(51) Int. Cl.: H04L 29/08

(54) **Verfahren und Web-basiertes Kommunikationssystem zum Führen eines Benutzers zu wenigstens einem Produkt**
Method and www-based communication system for guidance of user to at least one product
Procédé et système de communication basé sur le www pour guider l'utilisateur vers un produit au minimum

(30) Priorität: 10.12.2003 DE 10357632
(43) Veröffentlichungstag der Anmeldung: 15.06.2005
(73) Patentinhaber: Deutsche Telekom AG, 53113 Bonn (DE)
(72) Erfinder: Böhm, Andreas, Dr., 64342 Seeheim-Jugenheim (DE); Haffner, Markus, 64347 Griesheim (DE)

(56) Entgegenhaltungen:
- WO-A-02/17212
- US-A1- 2002 133 545
- US-A1- 2003 088 443
- US-B1- 6 236 990

## Beschreibung

Die Erfindung betrifft ein Verfahren zum Implementieren eines interaktiven Kommunikationssystems zum Führen eines Benutzers zu wenigstens einem Produkt unter Verwendung eines Web-basierten Kommunikationssystems, ein computerlesbares Medium mit einem gespeicherten Programm zur Durchführung des Verfahrens, sowie ein Web-basiertes Kommunikationssystem zum Führen eines Benutzers zu wenigstens einem Produkt.

In Datennetzen, wie zum Beispiel dem Internet, werden immer mehr kostenpflichtige und kostenlose Informationen über Produkte, wie zum Beispiel Softwareprodukte, für die Kunden bereitgestellt.

Allerdings ist es für Kunden recht zeitaufwendig und wegen fehlender Sachkenntnis gelegentlich unmöglich, eine geeignete Softwarelösung aus der Vielzahl angebotener Softwarekomponenten zusammenzustellen. Denn Hersteller oder Anbieter von IT-Tools informieren meistens nur darüber, welche Funktionen ihre IT-Tools besitzen. Um allerdings herauszufinden, ob und welche IT-Tools für spezifische Geschäftsaufgaben geeignet sind, sind Fachkenntnisse sowie ein hoher Suchaufwand notwendig. Zwar gibt es einige Internet-Dienste, wie zum Beispiel den Content-Manager, der Produkte und Anbieter auflistet. Die grobe Beschreibung der IT-Tools oder eine allgemeine Aussage vom Hersteller oder Anbieter über die Funktionen der IT-Tools reicht nicht aus, um einem Benutzer bei der Wahl zu helfen, ein geeignetes IT-Tool für seinen Geschäftsprozess auszuwählen.

Aus US 6 236 990 B1 ist ein System und ein Verfahren zur Unterstützung eines Benutzers bei der Auswahl eines Produktes aus einer Vielzahl von in Kategorien gruppierten Produkten bekannt. Zu diesem Zweck sieht das in US 6 236 990 B1 beschriebene, auf einem Computer ausführbare, Verfahren vor, dass der Benutzer eine Produktkategorie auswählt und durch Beantworten von Fragen eine Gewichtung von Attributen der ausgewählten Produktkategorie vornimmt. Auf Basis der durch den Benutzer vorgenommenen Gewichtungen und hinterlegten Bewertungen der zur ausgewählten Produktkategorie gehörenden Produkte im Hinblick auf die einzelnen Attribute wird eine Rangfolge der Produkte berechnet und dem Benutzer angezeigt.

WO 02/17212 A1 beschreibt ein Verfahren und ein System zum Gewinnen von Informationen über Vorlieben von Konsumenten, wobei Benutzer auf wenigstens einen Server zugreifen, welcher über ein Kommunikationsnetz mit dem Computer des jeweiligen Benutzers verbunden ist. Der Benutzer gibt produktspezifische Suchkriterien an, auf deren Grundlage passende Produkte in einer Produktdatenbank gesucht und dem Benutzer angezeigt werden.

In Zusammenfassung des Stands der Technik sind also Verfahren bekannt, die zum Führen eines Benutzers zu wenigstens einem Produkt unter Verwendung eines interaktiven Kommunikationssystem, welches ein Kommunikationsnetz umfasst geeignet sind und die die folgenden Schritte ausführen:
* Erstellen von mehreren Software-Produkten
* Bereithalten von Produkt-spezifischen Informationen in einem Server
* Zuordnung mindestens eines Merkmals zu jedem Produkt
* automatisches Auswählen eines Produkts in Abhängigkeit eines Benutzerprofils
* Darstellen der ausgewählten Produkte an einem Rechner des Benutzers
wobei das Auswählen wenigstens eines Produktes, dessen Merkmale mit dem Benutzerprofil übereinstimmt und / oder um einen vorbestimmten Betrag von diesem abweichen.

Ein wesentliches Hindernis auf dem Weg, die geeigneten IT-Tools zu finden, ist darin zu sehen, dass die Eigenschaften eines Benutzers in der Struktur der Informationsverteilung sowie bei der Suche danach nicht ausreichend berücksichtigt werden.

Der vorliegenden Erfindung liegt daher die Aufgabe zugrunde, ein Verfahren, ein Web-basiertes Kommunikationssystem sowie ein computerlesbares Medium mit einem darauf abgelegten Programm bereitzustellen, die einen Benutzer unterstützen, bei der Erledigung einer speziellen Geschäftsaufgabe oder dem Erreichen eines vorgegebenen Ziels rasch und auf einfachem Wege zu einem gewünschten Produkt, insbesondere zu einer bestimmten Softwarelösung zu gelangen.

Ein Kerngedanke der Erfindung ist darin zu sehen, eine Interaktion zwischen einem Benutzer und einem Web-basierten Kommunikationssystem zu schaffen, um den Benutzer zumindest teilweise automatisiert zu den geeigneten Produkten zu führen, die sich zur Lösung eines Problems des Benutzers eignen. Das Sammeln von Informationen sowie die Bereitstellung von Softwareprodukten ist zwar ein Teil der Erfindung, aber nicht deren Schwerpunkt. Vielmehr liegt der Kern der Erfindung darin, dass ausgehend von dem individuellen Nutzerprofil (wie zum Beispiel Benutzertyp, Position im Unternehmen, Abteilung, Größe des Unternehmens) eines Benutzers eine geeignete Softwarelösung vorgeschlagen wird.

Die Erfindung löst das technische Problem zum einen mittels eines Verfahrens zum Implementieren eines interaktiven Kommunikationssystems zum Führen eines Benutzers zu wenigstens einem geeigneten Produkt unter Verwendung eines Kommunikationsnetzes, beispielsweise das Internet. An dieser Stelle sei erwähnt, dass unter dem Begriff "Produkt" zum Beispiel Software-Tools, -Module oder ganze Softwarelösungen zu verstehen sind.

Das Verfahren weist folgende Schritte auf:
- Erstellen von mehreren Produkten;
- Bereithalten von Produkt-spezifischen Informationen in wenigstens einem Server;
- Auffordern eines Benutzers, ein Nutzerprofil, d. h. Benutzereigenschaften, einzugeben;
- automatisches Auswählen wenigstens eines Produkts in Abhängigkeit von dem eingegebenen Nutzerprofil; und
- Darstellen der zu dem wenigstens einen ausgewählten Produkt gespeicherten Produkt-spezifischen Information an einem Rechner des Benutzers.

Ein Vorteil dieses Verfahrens ist darin zu sehen, dass im Gegensatz zu üblichen Suchmechanismen Ausgangspunkt nicht die verfügbaren Informationen oder Werkzeuge, sondern der Benutzer, d. i. in der Regel ein Unternehmen, und dessen in vorbestimmten Grenzen wählbaren Nutzerprofil ist. Auf diese Weise braucht sich der Benutzer nur auf seine Ziele und Aufgaben zu konzentrieren. Unter Anwendung des Verfahrens bekommt der Benutzer Antworten auf die Fragen "welches Produkt brauche ich, um mein Ziel zu erreichen oder meine gestellte Aufgabe zu erledigen" automatisch vorgeschlagen. Dadurch kann der Aufwand für eine Recherche nach richtigen Informationen und Produkten drastisch reduziert werden.

Das Verfahren kann dem Benutzer beispielsweise Software Lösungen anbieten, die jeweils aus mehreren Softwaremodulen, wie zum Beispiel CRM-, E-Shop-, ERP (Exterior Routing Protocol)-Module, zusammengestellt sind.

Vorteilhafte Weiterbildungen sind Gegenstand der Unteransprüche.

Um Produkte gezielt auffinden zu können, kann jedem Produkt wenigstens ein Merkmal zugeordnet werden. Darüber hinaus enthält ein Nutzerprofil wenigstens ein benutzerspezifisches Merkmal, wie zum Beispiel den Namen eines Unternehmens, die Branche, einen Nutzertyp, die Position im Unternehmen, die Abteilung, die Anzahl der Mitarbeiter des Unternehmens und dergleichen. Das automatische Auswählen wenigstens eines Produkts erfolgt dann dadurch, dass benutzerspezifische Merkmale mit den korrespondierenden Merkmalen der Produkte verglichen werden und dass wenigstens ein Produkt, dessen Merkmale mit den entsprechenden benutzerspezifischen Merkmalen übereinstimmen und/oder um einen vorbestimmten Betrag von diesen abweichen, ausgewählt wird.

Vorzugsweise sind die Produkt-spezifischen Informationen im XML-Format abgelegt.

Das oben genannte technische Problem wird ebenfalls durch ein computerlesbares Medium mit darauf gespeichertem Programm zur Durchführung eines Verfahrens mit den folgenden Schritten gelöst:
- Auffordern eines Benutzers, ein Nutzerprofil einzugeben;
- automatisches Auswählen wenigstens eines Produkts in Abhängigkeit von dem eingegebenen Nutzerprofil; und
- Darstellen der zu dem wenigstens einen ausgewählten Produkt in einem Server gespeicherten Produkt-spezifischen Information an einem Rechner des Benutzers.

Das oben genannte technische Problem wird ebenfalls durch ein Web-basiertes Kommunikationssystem zum Führen eines Benutzers zu wenigstens einem Produkt gelöst.

Das Web-basierte Kommunikationssystem umfasst wenigstens einen Server zum Bereithalten von Produkt-spezifischen Informationen, eine programmgesteuerte Steuereinrichtung, die folgende Handlungen bewirkt: Auffordern eines Benutzers, ein Nutzerprofil einzugeben, automatisches Auswählen wenigstens eines Produkts in Abhängigkeit von dem eingegebenen Nutzerprofil und Darstellen der zu dem wenigstens einen ausgewählten Produkt gespeicherten Produkt-spezifischen Information an einem Rechner des Benutzers.

Um einen Benutzer zuverlässig und gezielt zu geeigneten Produkten führen zu können, ist zweckmäßigerweise jedem Produkt wenigstens ein Merkmal zugeordnet. Zudem enthält das Nutzerprofil wenigstens ein benutzerspezifisches Merkmal. In diesem Fall bewirkt die programmgesteuerte Steuereinrichtung einen Vergleich des wenigstens einen benutzerspezifischen Merkmals mit den korrespondierenden, den Produkten zugeordneten Merkmalen und ein Auswählen wenigstens eines Produktes, dessen Merkmale mit den entsprechenden benutzerspezifischen Merkmalen übereinstimmen und/oder um einen vorbestimmten Betrag von diesen abweichen.

Die Erfindung wird nachfolgend anhand eines Ausführungsbeispiels in Verbindung mit den beiliegenden Zeichnungen näher erläutert.
- Fig. 1: zeigt schematisch ein Web-basiertes Kommunikationssystem, in dem die Erfindung verwirklicht ist, und,
- Fig. 2: zeigt ein schematisches Blockschaltbild zur Erläuterung der Funktionsweise der Erfindung.

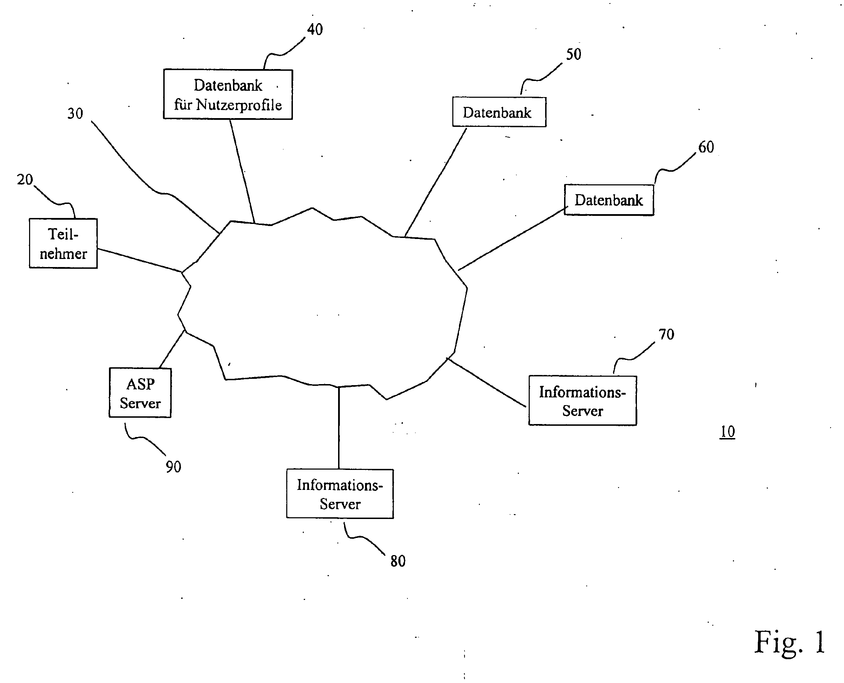

Fig. 1 zeigt beispielhaft ein WEB-basiertes Kommunikationssystem 10, welches das Internet 30 benutzt, um beispielsweise einen Teilnehmer 20, einen ASP-Server 90, zwei Informations-Server 70 und 80 und drei Datenbanken 40, 50 und 60 zu verbinden. Bei dem Teilnehmer 20 kann es sich beispielsweise um einen Personalcomputer in einem Unternehmen mit einem Internetzugang handeln.

In dem ASP-Server 90 ist ein Auswahl-Service-Programm (ASP) implementiert, welches zur Durchführung des erfindungsgemäßen Verfahrens benötigt wird. In dem Informations-Server 80 sind Produkt-spezifische Informationen in Form von Webseiten abgelegt, die sich auf spezielle, von einem Anbieter A zusammengestellte Softwarelösungen beziehen. Diese Softwarelösungen dienen zum Beispiel dazu, spezielle Aufgaben in einem Unternehmen zu lösen. In dem Informations-Server 70 sind Produkt-spezifische Informationen in Form von Webseiten abgelegt, die sich auf spezielle, von einem Anbieter B zusammengestellte Softwarelösungen beziehen. Diese Softwarelösungen dienen zum Beispiel ebenfalls dazu, spezielle Aufgaben in einem Unternehmen zu lösen. In der Datenbank 50 ist eine Zuordnungstabelle abgelegt, die den von dem Anbieter A erstellten Softwarelösungen bestimmte Merkmale zuordnet. Bei diesen Merkmalen kann es sich um die Branche (Merkmal 1), die Kundenanzahl (Merkmal 2) und Größe eines Unternehmens (Merkmal 3) handeln. Die Merkmale werden vom Anbieter A oder unter Anwendung eines Expertensystems automatisch den Softwarelösungen zugeordnet. Es versteht sich, dass die Datenbank 50 auch im Informationsserver 80 des Anbieters A implementiert sein kann.

In der Datenbank 60 ist eine Zuordnungstabelle abgelegt, die den von dem Anbieter B erstellten Softwarelösungen bestimmte Merkmale zuordnet. Bei diesen Merkmalen kann es sich ebenfalls um die Branche (Merkmal 1), die Kundenanzahl (Merkmal 2) und Größe eines Unternehmens (Merkmal 3) handeln. Die Merkmale werden vom Anbieter B oder unter Anwendung eines Expertensystems automatisch den Softwarelösungen zugeordnet. Es versteht sich, dass die Datenbank 60 auch im Informationsserver 70 des Anbieters B implementiert sein kann. Ein wesentlicher Aspekt des Kommunikationssystems ist es, einem Benutzer eine oder mehrere in den Informations-Servern 70 und 80 abgelegte Softwarelösungen in Abhängigkeit eines Nutzerprofils, welches der Benutzer am Personal Computer 20 eingeben kann, zum Kauf anzubieten. Das von einem Benutzer eingegebene Nutzerprofil kann in der Datenbank 40 gespeichert werden. Dadurch ist es möglich, dass der ASP-Server 40 bei einem wiederholten Aufruf durch einen registrierten Benutzer Produktvorschläge dem Benutzer unterbreiten kann, ohne dass der Benutzer ein Nutzerprofil eingeben muss.

Es versteht sich, dass mehrere Informations-Server und Personal Computer an das Internet 30 angeschlossen sein können.

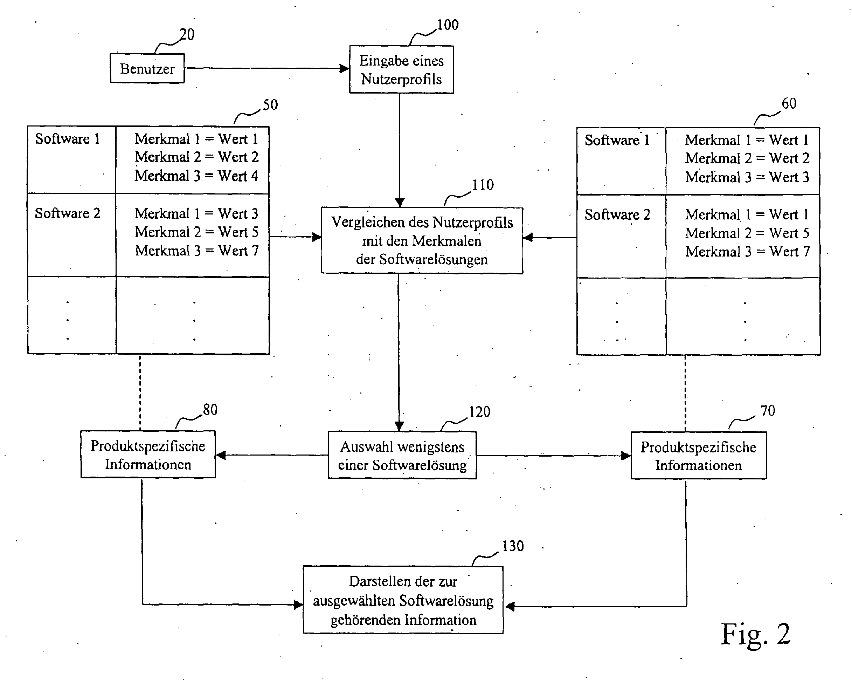

Die Erfindung wird nachfolgend anhand eines Ausführungsbeispiels in Verbindung mit Fig. 2 näher erläutert.

Angenommen sei, dass Anbieter A mehrere Softwarelösungen erstellt hat, von denen zwei in Block 50, der der Datenbank 50 in Fig. 1 entspricht, angezeigt sind. Softwarelösung 1 kann ein Softwarebündel aus den Softwaremodulen ERP und Shop sein, während Softwarelösung 2 ein Softwarebündel aus den Modulen CRM und ERP sein kann. Ferner sei angenommen, dass der Anbieter A der Softwarelösung 1 das Merkmale 1 mit einem Wert 1, das entspricht zum Beispiel der Branche "Fertigung mit Verkauf", das Merkmal 2 mit einem Wert 2, das entspricht beispielsweise einer Kundenanzahl von mehr als 50 000, und das Merkmal 3 mit einem Wert von 4, das entspricht einer Unternehmensgröße von mehr als 400 Mitarbeitern, zugeordnet hat. Der Softwarelösung 2 wurde das Merkmale 1 mit einem Wert 3, das entspricht zum Beispiel der Branche "Handel", das Merkmal 2 mit einem Wert 5, das entspricht beispielsweise einer Kundenanzahl von mehr als 80 000, und das Merkmal 3 mit einem Wert von 7, das entspricht einer Unternehmensgröße von mehr als 700 Mitarbeitern, zugeordnet.

Angenommen sei weiterhin, dass Anbieter B mehrere Softwarelösungen erstellt hat, von denen zwei in Block 60, der der Datenbank 60 in Fig. 1 entspricht, angezeigt sind. Softwarelösung 1 kann ein Softwarebündel aus den Softwaremodulen ERP, CRM und Shop sein, während Softwarelösung 2 ein Softwarebündel aus den Modulen CRM und ERP sein kann. Ferner sei angenommen, dass der Anbieter B seiner Softwarelösung 1 das Merkmale 1 mit einem Wert 1, das entspricht zum Beispiel der Branche "Fertigung mit Verkauf", das Merkmal 2 mit einem Wert 2, das entspricht beispielsweise einer Kundenanzahl von mehr als 50 000, und das Merkmal 3 mit einem Wert von 3, das entspricht einer Unternehmensgröße von mehr als 300 Mitarbeitern, zugeordnet hat. Der Softwarelösung 2 des Anbieters B wurde das Merkmale 1 mit einem Wert 1, das entspricht zum Beispiel der Branche "Fertigung mit Verkauf", das Merkmal 2 mit einem Wert 5, das entspricht beispielsweise einer Kundenanzahl von mehr als 80 000, und das Merkmal 3 mit einem Wert von 7, das entspricht einer Unternehmensgröße von mehr als 700 Mitarbeitern, zugeordnet.

In den Blöcken 70 und 80, die den Informations-Servern 70 und 80 nach Fig. 1 entsprechen, wurden Webseiten hinterlegt, die Produkt-spezifische Informationen zu den Softwarelösungen 1 und 2 des Anbieters B bzw. A enthalten.

Nunmehr sei angenommen, dass sich eine berechtigte Person eines Unternehmens über den Personalcomputer 20 an dem Kommunikationssystem 10 angemeldet hat und gemäß Block 100 folgende Merkmale als Nutzerprofildaten für das Unternehmen eingegeben hat:
*Branche = Fertigung mit Verkauf*
*Kundenanzahl* > *50 000*
*Größe des Unternehmens > 400*

Nach Eingabe dieser Merkmale bewirkt der ASP-Server 90, dass in Block 110 die vom Benutzer eingegebenen Merkmale mit den entsprechenden Merkmalen 1 bis 3, die den Softwarelösungen der Anbieter A und B zugeordnet sind, verglichen werden. Hierzu greift Block 110 nacheinander auf die Blöcke 50 und 60 zu. Block 110 stellt nun fest, dass die vom Benutzer eingegebene Branche "Fertigung mit Vekauf" und die eingegebene Kundenanzahl von mehr als 50 000 mit den Merkmalen 1 und 2 der Softwarelösung 1 der Anbieter A und B übereinstimmen. Darüber hinaus stellt Block 110 fest, dass die vom Benutzer eingegebene Größe des Unternehmens von mehr als 400 Mitarbeitern mit dem Merkmal 3 der Softwarelösung 1 des Anbieters A übereinstimmt. Demzufolge wählt Block 120 die Softwarelösung 1 des Anbieters A aus. Sind Toleranzbereiche für die Merkmale 2 und 3 definiert, zum Beispiel für Merkmal 3 ein Toleranzbereich von -100, wählt Block 120 auch die Softwarelösung 1 des Anbieters B mit aus. Anschließend greift Block 120 auf die Blöcke 80 und 70 zu und veranlasst, dass gemäß Block 130 die Produkt-spezifischen Informationen über die Softwarelösungen 1 der Anbieter A und B am Personal Computer 20 dargestellt werden.

Dank des Kommunikationssystems 10 ist es möglich, einem Benutzer automatisiert maßgeschneiderte Softwarelösungen anzubieten, ohne dass der Benutzer über spezielle Kenntnisse über die angebotenen Softwarekomponenten verfügen muss.

## Patentansprüche

1. Verfahren zum Führen eines Benutzers zu wenigstens einem Software-Produkt unter Verwendung eines interaktiven Kommunikationssystems (10), welches ein Kommunikationsnetz (30) umfasst, **gekennzeichnet durch** die Schritte:
- Erstellen von mehreren Software-Produkten, wie Software-Tools, Software-Module, Software-Bündel oder Softwarelösungen;
- Bereithalten von Produkt-spezifischen Informationen in wenigstens einem Server (70, 80);
- Zuordnen wenigstens eines Merkmals, aus der Gruppe: Branche, Kundenanzahl oder Größe eines Unternehmens, zu jedem Produkt;
- Auffordern eines Benutzers, ein Nutzerprofil mit wenigstens einem benutzerspezifischen Merkmal, aus der Gruppe: Branche, Kundenanzahl oder Größe eines Unternehmens, einzugeben;
- automatisches Auswählen wenigstens eines Software-Produkts in Abhängigkeit von dem eingegebenen Nutzerprofil; und
- Darstellen der zu dem wenigstens einen ausgewählten Software-Produkt gespeicherten Produkt-spezifischen Information an einem Rechner (20) des Benutzers,
wobei der Schritt des automatischen Auswählens wenigstens eines Software-Produkts folgende Schritte umfasst:
- Vergleichen des wenigstens einen benutzerspezifischen Merkmals mit korrespondierenden, den Software-Produkten zugeordneten Merkmalen, und
- Auswählen wenigstens eines Software-Produktes, dessen Merkmale mit den entsprechenden benutzerspezifischen Merkmalen übereinstimmen und/oder um einen vorbestimmten Betrag von diesen abweichen.

2. Verfahren nach Anspruch 1,
**dadurch gekennzeichnet, dass**
die Produkt-spezifischen Informationen im XML-Format abgelegt sind.

3. Verfahren nach einem der Ansprüche 1 oder 2,
**dadurch gekennzeichnet, dass**
die Software-Produkte jeweils eine mehrere Software-Module umfassende Software sind.

4. Computerlesbares Medium mit darauf gespeichertem Programm zur Durchführung des Verfahrens nach einem der Ansprüche 1 bis 3.

5. Web-basiertes Kommunikationssystem (10) zum Führen eines Benutzers zu wenigstens einem Software-Produkt, wie Software-Tool, Software-Modul, Software-Bündel oder Softwarelösung, umfassend
wenigstens einen Server (70, 80) zum Bereithalten von Produkt-spezifischen Informationen, **gekennzeichnet durch**
eine programmgesteuerte Steuereinrichtung (90) zum Auffordern eines Benutzers, ein Nutzerprofil einzugeben,
zum automatischen Auswählen wenigstens eines Software-Produkts in Abhängigkeit von dem eingegebenen Nutzerprofil und zum Darstellen der zu dem wenigstens einen ausgewählten Software-Produkt gespeicherten Produkt-spezifischen Information an einem Rechner (20) des Benutzers, wobei der wenigstens eine Server (70, 80), die programmgesteuerte Steuereinrichtung (90) und der Rechner (20) des Benutzers über ein Kommunikationsnetz (30) verbunden sind, und wobei
jedem Software Produkt wenigstens ein Merkmal aus des Gruppe: Branche, Kundenanzahl oder Größe eines Unternehmens, zugeordnet ist,
das Nutzerprofil wenigstens ein benutzerspezifisches Merkmal aus der Gruppe: Branche, Kundenanzahl oder Größe eines Unternehmens enthält, und
die programmgesteuerte Steuereinrichtung (90) zum Vergleichen des wenigstens einen benutzerspezifischen Merkmals mit korrespondierenden, den Software-Produkten zugeordneten Merkmalen und zum Auswählen wenigstens eines Software-Produktes, dessen Merkmale mit den entsprechenden benutzerspezifischen Merkmalen übereinstimmen und/oder um einen vorbestimmten Betrag von diesen abweichen, ausgebildet ist.

## Claims

1. Method for guiding a user to at least one software product, using an interactive communication system (10), which system includes a communication network (30), **characterized by** the steps:
- production of multiple software products, such as software tools, software modules, software bundles, or software solutions;
- keeping product-specific information available on at least one server (70, 80);
- allocation of at least one characteristic from the group consisting of: industry, number of customers, or company size, to each product;
- prompting of a user to enter a user profile with at least one user-specific characteristic from the group consisting of: industry, number of customers, or company size;
- automatic selection of at least one software product as a function of the user profile entered; and
- display of the product-specific information stored for the at least one selected software product on a computer (20) of the user,
wherein the step of automatic selection of at least one software product includes the following steps:
- comparing the at least one user-specific characteristic to corresponding characteristics allocated to the software products, and
- selection of at least one software product whose characteristics match the applicable user-specific characteristics and/or deviate therefrom by a predetermined amount.

2. Method according to claim 1, **characterized in that** the product-specific information is stored in XML format.

3. Method according to either claim 1 or 2, **characterized in that** each of the software products is software comprised of multiple software modules.

4. Computer-readable medium with program stored thereon for carrying out the method according to any one of claims 1 through 3.

5. Web-based communication system (10) for guiding a user to at least one software product, such as a software tool, software module, software bundle, or software solution, including
at least one server (70, 80) for keeping available product-specific information, **characterized by**
a program-controlled control device (90) for prompting a user to enter a user profile,
for automatic selection of at least one software product as a function of the entered user profile, and
for displaying on a computer (20) of the user the product-specific information stored for the at least one selected software product, wherein
the at least one server (70, 80), the program-controlled control device (90), and the computer (20) of the user are connected by a communication network (30), and
wherein
at least one characteristic from the group consisting of: industry, number of customers, or company size is allocated to each software product,
the user profile contains at least one user-specific characteristic from the group consisting of: industry, number of customers, or company size, and
the program-controlled control device (90) is designed to compare the at least one user-specific characteristic to corresponding characteristics allocated to the software products, and to select at least one software product whose characteristics match the applicable user-specific characteristics and/or deviate therefrom by a predetermined amount.

## Revendications

1. Procédé pour guider un utilisateur vers au moins un produit logiciel en utilisant un système de communication interactif (10) qui comprend un réseau de communication (30), **caractérisé par** les étapes :
- création de plusieurs produits logiciels du type outils logiciels, modules logiciels, packs logiciels ou solutions logicielles ;
- tenue à disposition d'informations spécifiques au produit dans au moins un serveur (70, 80) ;
- attribution à chaque produit d'au moins une caractéristique parmi le groupe: secteur d'activité, nombre de clients ou taille d'une entreprise ;
- invitation d'un utilisateur à entrer un profil d'utilisateur contenant au moins une caractéristique spécifique à l'utilisateur, choisie parmi le groupe : secteur d'activité, nombre de clients ou taille d'une entreprise ;
- sélection automatique d'au moins un produit logiciel en fonction du profil d'utilisateur entré ; et
- visualisation, au niveau d'un calculateur (20) de l'utilisateur, de l'information spécifique au produit enregistrée pour ledit au moins un produit logiciel sélectionné,
l'étape de la sélection automatique d'au moins un produit logiciel comprenant les étapes suivantes :
- comparaison de ladite au moins une caractéristique spécifique à l'utilisateur avec des caractéristiques correspondantes, associées aux produits logiciels, et
- sélection d'au moins un produit logiciel dont les caractéristiques coïncident avec les caractéristiques spécifiques à l'utilisateur correspondantes et/ou diffèrent de celles-ci d'une valeur prédéterminée.

2. Procédé selon la revendication 1,
**caractérisé en ce que**
les informations spécifiques au produit sont stockées sous le format XML.

3. Procédé selon l'une quelconque des revendications 1 ou 2,
**caractérisé en ce que**
les produits logiciels consistent respectivement en un logiciel comprenant plusieurs modules logiciels.

4. Support lisible par ordinateur comportant un programme qui y est enregistré, permettant la mise en oeuvre du procédé selon l'une quelconque des revendications 1 à 3.

5. Système de communication (10) basé sur le web pour guider un utilisateur vers au moins un produit logiciel du type outil logiciel, module logiciel, pack logiciel ou solution logicielle, comprenant
au moins un serveur (70, 80) permettant de tenir à disposition des informations spécifiques au produit, **caractérisé par**
un système de commande (90) commandé par programme permettant
d'inviter un utilisateur à entrer un profil d'utilisateur,
de sélectionner automatiquement au moins un produit logiciel en fonction du profil d'utilisateur entré et
de visualiser pour ledit au moins un produit logiciel sélectionné, au niveau d'un calculateur (20) de l'utilisateur, l'information spécifique au produit enregistrée, ledit au moins un serveur (70, 80), ledit système de commande (90) commandé par programme et ledit calculateur (20) de l'utilisateur étant reliés par l'intermédiaire d'un réseau de communication (30), et au moins une caractéristique parmi le groupe 'secteur d'activité, nombre de clients ou taille d'une entreprise' étant associée à chaque produit logiciel,
le profil d'utilisateur contenant au moins une caractéristique spécifique à l'utilisateur parmi le groupe 'secteur d'activité, nombre de clients ou taille d'une entreprise', et
le système de commande (90) commandé par programme étant réalisé de manière à permettre de comparer ladite au moins une caractéristique spécifique à l'utilisateur avec des caractéristiques correspondantes, associées aux produits logiciels, et de sélectionner au moins un produit logiciel dont les caractéristiques coïncident avec les caractéristiques spécifiques à l'utilisateur correspondantes et/ou diffèrent de celles-ci d'une valeur prédéterminée.
